# EUROPEAN PATENT APPLICATION

(11) **EP 2 163 440 A2**
(43) Date of publication of application: **17.03.2010**
(21) Application number: 09008285.0
(22) Date of filing: 24.06.2009
(51) Int. Cl.: B60R 22/48

(54) **Seat belt retractor and seat belt apparatus having the same**

(30) Priority: 16.09.2008 JP 2008236017
(71) Applicant: Takata Corporation, Tokyo 106-8510 (JP)
(72) Inventor: Mori, Takahiro, Tokyo 106-8510 (JP); Kimura, Takaaki, Tokyo 106-8510 (JP); Tonbe, Hideyuki, Tokyo 106-8510 (JP); Takao, Masato, Tokyo 106-8510 (JP)
(74) Representative: Banzer, Hans-Jörg

(57) **Abstract**

In order to provide a seat belt retractor (3) which possibly prevents its size from being large and reduces the man-hour requirement for installing the seat belt retractor (3) to a vehicle body, a motor (26) for rotating a spool for winding a seat belt (4) and an ECU (25) for the motor (26) are united to compose a motor/ECU all-in-one unit (23). The motor/ECU all-in-one unit (23) is supported on a frame (8) just below the spool. In this case, the motor (26) and ECU (25) are accommodated in a unit casing (24) of which a casing body (24a) is flatly supported on a unit stay (29). The unit stay (29) is supported by the frame (8).

## Description

### Technical Field of the Invention

The present invention relates to a technical field of a seat belt retractor in which a motor is used to wind and unwind a seat belt, to a technical field of a seat belt apparatus for a vehicle having the aforementioned seat belt retractor, and, more particularly to a technical field of a seat belt retractor and a seat belt apparatus further having a pretensioner.

### Related Art

Conventionally, for seat belt apparatuses installed in vehicles such as automobiles, there have been proposed various seat belt retractors which are provided with a pretensioner and in which the winding and unwinding of a seat belt is conducted by rotating a spool using a motor (see JP-A-2004-189024).

The pretensioner is required to wind up the seat belt for a predetermined amount by actuation at an initial stage in an emergency situation in which a deceleration larger than normal deceleration is applied to a vehicle during a vehicle collision or the like. In a seat belt retractor disclosed in JP-A-2004-189024, a connector of a gas generator for the pretensioner is located at a lower end of a frame of the seat belt retractor to ensure the operation amount of the pretensioner. A motor for rotating the spool is disposed below the connector.

### Problems to be solved by the Invention

By the way, as the pretensioner is disposed to extend to the lower end of the frame like the seat belt retractor disclosed in JP-A-2004-189024, there is no space for mounting the motor to the frame. Accordingly, it is difficult to design such an arrangement that the motor is supported directly by the frame. To solve this problem, in the seat belt retractor disclosed in JP-A-2004-189024, a supporting member is mounted to the lower end of the frame and the motor is supported at its both ends by the supporting member.

In case that the motor is supported by the supporting member mounted to the frame, however, there is another problem that the seat belt retractor greatly projects downwardly so that the apparatus becomes large. In addition, an electric control unit (ECU) for controlling the actuation of the motor must be disposed at another place of the vehicle body. Therefore, there is a problem that the wiring work between the motor and the ECU is complex so that man-hour requirement for mounting the seat belt retractor to the vehicle body is increased.

The present invention was made under the aforementioned circumstances and an object of the present invention is to provide a seat belt retractor which possibly prevents the size from being large and reduces the man-hour requirement for mounting the seat belt retractor to a vehicle body.

### Means to solve the Problems

According to the present invention, these objects are achieved by a seat belt retractor as defined in claim 1 and a seat belt apparatus as defined in claim 5. The dependent claims define preferred and advantageous embodiments of the invention. A seat belt retractor according to an aspect of the invention comprises: at least a spool for winding up a seat belt, a frame for rotatably supporting said spool; a motor for rotating said spool in a seat belt winding direction and a seat belt unwinding direction; and a power transmission unit for transmitting rotation of said motor to said spool, and is **characterized in that** said seat belt retractor further comprises an electric control unit (ECU) for controlling said motor, in that said motor and said electric control unit are united to compose a motor/ECU all-in-one unit, and in that said motor/ECU all-in-one unit is supported on said frame directly below said spool.

According to an embodiment, the seat belt retractor further comprises a pretensioner which rotates said spool in the seat belt winding direction with gas generated by a gas generator in the event of an emergency, wherein said gas generator for said pretensioner is disposed above said spool and is supported by said frame.

According to another embodiment, the seat belt retractor is **characterized in that** said power transmission unit comprises a power transmission mechanism for transmitting the rotation of said motor to said spool with reducing the speed and a power transmission retainer for accommodating said power transmission mechanism, and in that said power transmission retainer functions also as a casing for said pretensioner.

Furthermore, an embodiment of the seat belt retractor of the present invention is **characterized in that** said motor/ECU all-in-one unit has a unit casing, in that said motor and said electric control unit are accommodated in said unit casing, in that said unit casing comprises a casing body having an upper opening, and a cover for closing the upper opening of said casing body, and in that said casing body and said cover are each made of a thermal-conductive material having high thermal conductivity.

Moreover, according to another aspect of the present invention, a seat belt apparatus comprises at least a seat belt retractor for winding up a seat belt, a tongue slidably supported by the seat belt, and a buckle which is fixed to a vehicle body and to which said tongue can be detachably latched, and is **characterized in that** said seat belt retractor is one of the aforementioned seat belt retractors of the present invention.

### Effects of the Invention

According to the seat belt retractor of the present invention having the aforementioned structure, the motor and the electric control unit are united to compose a motor/ECU all-in-one unit, whereby the assembly work is achieved just by mounting the motor/ECU all-in-one unit to the frame of the seat belt retractor. Therefore, the installation of the seat belt retractor to the vehicle body is facilitated and the man-hour requirement for installation is reduced

Because of the motor/ECU all-in-one unit, the motor and the electric control unit can be previously connected by wires and the wires can be arranged within a unit casing. Therefore, the wiring work during the installation of the seat belt retractor to the vehicle body can be eliminated, thereby facilitating the installation of the seat belt retractor to the vehicle body and reducing leakage of noises produced by the wires without shield member for exclusive use. Therefore, the noise resistance of the seat belt retractor is improved and cost down is achieved.

Further, the gas generator of the pretensioner is disposed above the spool, thereby preventing the pretensioner from greatly projecting downwardly like the conventional seat belt retractor disclosed in the aforementioned JP-A-2004-189024. This allows a large space to be formed below the spool of the seat belt retractor so that this space can be used as an installation space for the motor and the electric control unit. Therefore, it is possible to effectively prevent the enlargement of the seat belt retractor, further effectively achieve uniting of the motor and the electric control unit, and install the motor and the electric control unit below the spool.

Further, the power transmission retainer functions also as the cover for the casing of the pretensioner, thereby allowing elimination of an exclusive cover for the casing of the pretensioner. Therefore, it is possible to further reduce the number of parts and reduce the man-hour requirement for assembling the seat belt retractor.

Since the unit casing of the motor/ECU all-in-one unit is made of a thermal-conductive material having good thermal conductivity, heat expelled from the motor can be efficiently released outside through the unit casing having good thermal conductivity even though the motor and the electric control unit are accommodated together in the unit casing. Therefore, the inner temperature of the unit casing can be prevented from increasing, thereby preventing the motor and the electric control unit from being affected by the heat.

Further, according to the seat belt apparatus having the seat belt retractor of the present invention, the seat belt retractor even having a motor can be formed to be compact, thereby reducing the installation space for the seat belt retractor. Therefore, the design freedom of the seat belt retractor for the installation to the vehicle body is increased. Therefore, the seat belt retractor can be flexibly installed to the vehicle body, thereby improving the convenience of the seat belt apparatus.

### Brief Explanation of the drawings

The invention will now be described in more detail with reference to the accompanying drawings, in which:
Fig. 1 is an illustration schematically showing a seat belt apparatus having an embodiment of a seat belt retractor according to the present invention.
Figs. 2(a)-2(c) show an embodiment of the seat belt retractor according to the present invention, wherein Fig. 2(a) is a view seen from the outside of a vehicle cabin, Fig. 2(b) is a view taken from the inside of the vehicle cabin, and Fig. 2(c) is a top view of the seat belt retractor.
Fig. 3(a) is a sectional view taken along a line IIIA-IIIA in Fig. 2(a), and Fig. 3(b) is a bottom view of the seat belt retractor shown in Figs. 2(a)-2(c).
Figs. 4(a)-4(c) are illustrations for explaining the operation of a pretensioner, wherein Fig. 4(a) is an illustration showing the pretensioner in the non-activated state, Fig. 4(b) is an illustration showing the pretensioner just after activated, and Fig. 4(c) is an illustration showing the pretensioner of which operation is terminated.
Fig. 5 is an exploded perspective view of a motor/ECU all-in-one unit.
Figs. 6(a)-6(d) show the motor/ECU all-in-one unit, wherein Fig. 6(a) is a top view, Fig. 6(b) is a front view, Fig. 6(c) is a perspective view, and Fig. 6(d) is a sectional view taken along a line VID-VID in Fig. 6(a).
Fig. 7(a) is a left-side view of a power transmission unit with its cover removed, Fig. 7(b) is a left-side view of the power transmission retainer, and Fig. 7(c) is a right-side view of the power transmission retainer.

Hereinafter, best modes for carrying out the present invention will be described with reference to the attached drawings.

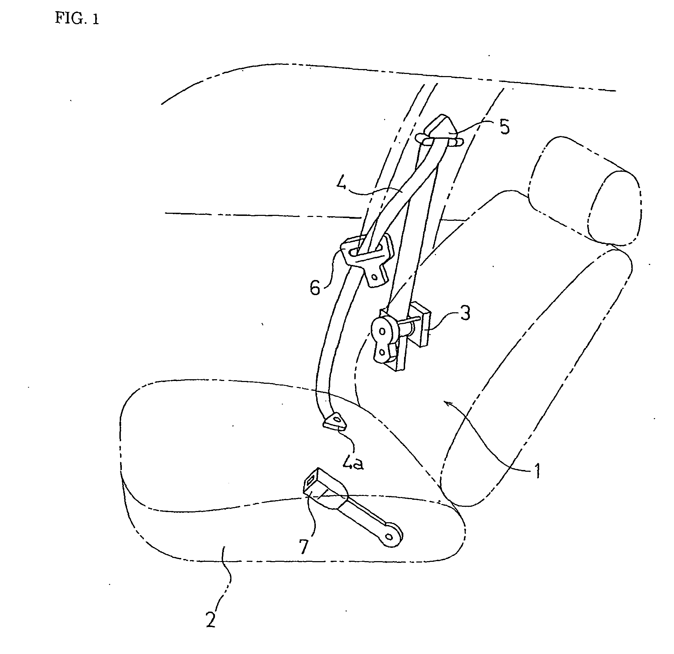

Fig. 1 is an illustration schematically showing a seat belt apparatus comprising a seat belt retractor of an embodiment according to the present invention.

As shown in Fig. 1, the seat belt apparatus I of this embodiment is basically the same as a conventionally known seat belt apparatus of a three-point type in which a motor is used to wind or unwind a seat belt. In Fig. 1, numeral 1 designates a seat belt apparatus, numeral 2 designates a vehicle seat, numeral 3 designates a seat belt retractor disposed near the vehicle seat 2, numeral 4 designates a seat belt which is wound into the seat belt retractor 3 allowing the seat belt 4 to be unwound and is provided at its end with a belt anchor 4a fixed to a vehicle floor or the vehicle seat 2 and to which the tongue 6 can be inserted and detachably latched.
The operation for putting on and off the seat belt 4 of the seat belt apparatus 1 is also the same as the conventionally known seat belt apparatus.

The seat belt retractor 3 of this embodiment has a pretensioner and a motor. Similarly to a conventionally known pretensioner, the pretensioner is activated when a deceleration significantly larger than the deceleration during the normal driving is applied to the vehicle such as a vehicle collision and rotates a spool of the seat belt retractor 3 in the seat belt winding direction to wind up the seat belt 4 by a predetermined amount, thereby increasing the force for restraining the occupant. Further, similarly to a motor of the conventionally known seat belt retractor, the motor winds and unwinds the seat belt by rotating the spool.

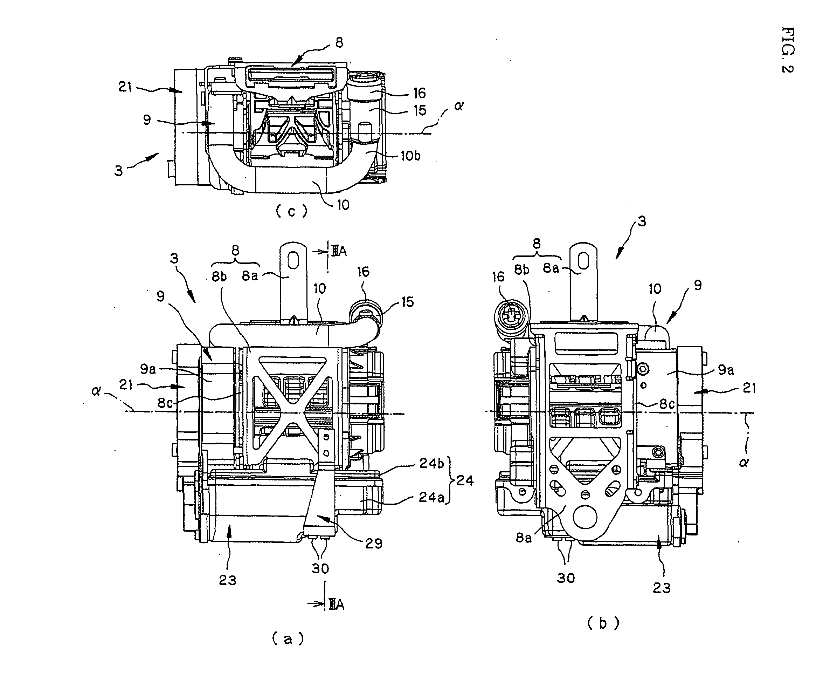

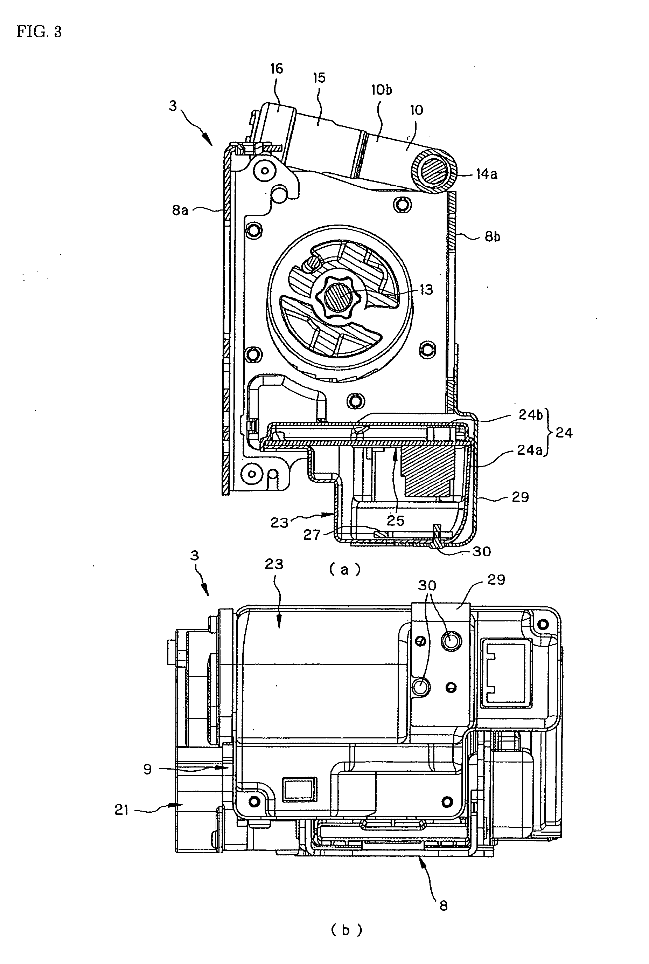

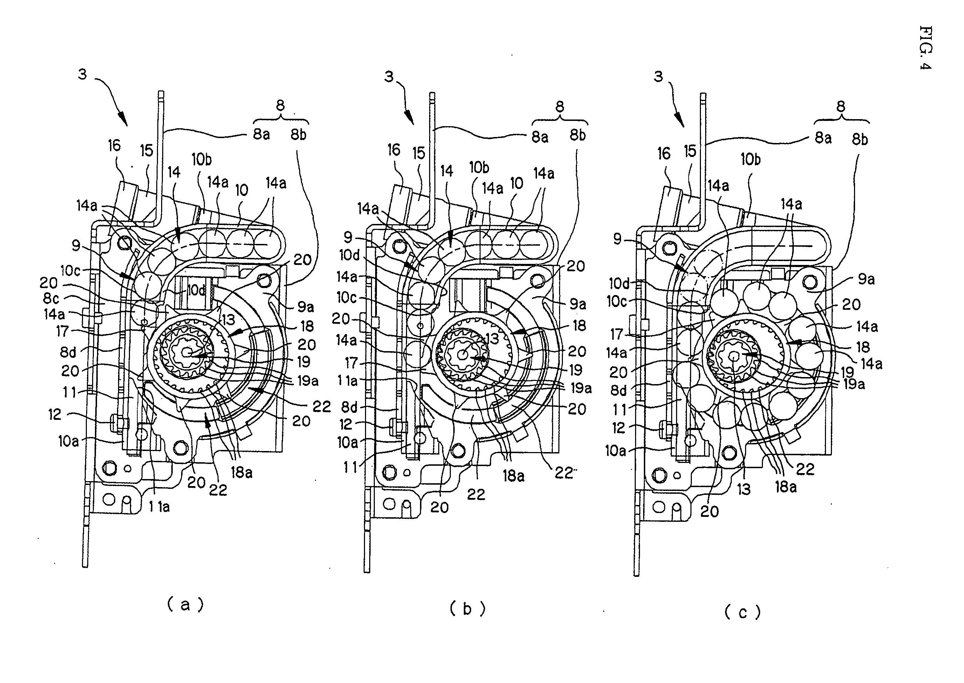

Figs. 2(a) through 2(c), Figs. 3(a) and 3(b) are illustrations showing the seat belt retractor of this embodiment, and Figs. 4(a) through 4(c) are illustrations showing the pretensioner.
As shown in Figs. 2(a) through 2(c), Figs. 3(a) and 3(b), a frame 8 of the seat belt retractor 3 comprises a plate-like stay 8a to be fixed to the vehicle body and a U-like base 8b which is attached to the stay 8a and supports components of the seat belt retractor 3.

The pretensioner 9 is attached to one of side walls 8c of the base 8b of the frame 8. The pretensioner is a pretensioner according to Japanese patent application No. 2008-199753 filed by the present applicant. Since the details of the pretensioner 9 have been described in the specification and drawings of Japanese patent application No. 2008-199753, the pretensioner will be described briefly here.

As shown in Figs. 4(a) through 4(c), the pretensioner 9 has a pipe 10 of which a distal end 10a is closed by a plug 11, The distal end 10a of the pipe 10 and the plug 11 are fixed to a pipe mounting portion 8d formed in the side wall 8c of the base 8b by fastener means 12 such as bolts and is positioned slightly below the spool (not shown) disposed coaxially with a rotary shaft 13. The rotary shaft 13 can rotate together with the spool.

In the pipe 10, a plurality of force transmitting members 14 composed of a plurality of balls 14a made of metal such as iron or aluminum and a piston, not shown, which receives gas pressure to press the balls 14a are movably arranged in the state being in contact with each other. In addition, a pipe-like pressure vessel 15 is connected to the proximal end 10b of the pipe 10. Disposed in the pressure vessel 15 is a gas generator 16.

The operation of the pretensioner 9 is basically the same as the operation of a conventionally known pretensioner using a plurality of balls, in that the pretensioner is activated in the event of emergency such as a vehicle collision in which a large deceleration is applied to a vehicle and thus rotates in the spool of the seat belt retractor 3 in the seat belt winding direction.

That is, as shown in Fig. 4(a), when the pretensioner 9 is not activated, the first one of the balls 14a is kept in contact with the lever 17 and the balls 14a following the first one are kept in contact with the adjacent balls 14a sequentially. During this, the gas generator 16 does not produce gas so that the balls 14a do not substantially press the lever 17. Therefore, the ring gear 18 is held in a state that its inner teeth 18a do not mesh with any of the external teeth 19a of the pinion 19.

In the event of emergency as mentioned above, the gas generator 16 is activated to produce gas so that a large pressing force is applied to the balls 14a by the gas pressure of the produced gas. By the pressing force transmitted through the first ball 14a, the ring gear 18 is moved in the rightward direction and is rotated in the counterclockwise direction in Fig. 4(a). Then, as shown in Fig. 4(b), some of the internal teeth 18a of the ring gear 18 mesh with some of the external teeth 19a of the pinion 19 so that the pinion 19 starts to rotate in the same direction as that of the ring gear 18. Accordingly, the rotary shaft 13 i.e. the spool starts to rotate in the seat belt winding direction, thereby starting the winding of the seat belt 4 worn by the occupant.

As the first ball 14a is received between the levers 17 and 20 and the second ball 14a comes in contact with the lever 20 which is adjacent to the lever 17 in the clockwise direction, the ring gear 18 and the pinion 19 are further rotated together in the counterclockwise direction with the pressing force onto the lever 20 by the second ball 14a. At this point, the pressing force onto the lever 17 by the first ball 14a is substantially lost. Two balls, i.e. the second and third balls 14a are received between the lever 20 and the next lever 20 which is adjacent to the lever 20 in the clockwise direction. As the fourth ball 14a next to the third ball 14a comes in contact with the next lever 20, the ring gear 18 and the pinion 19 are further rotated in the counterclockwise direction with the pressing force on to the next lever 20 by the fourth ball 14a. At this point, the pressing force onto the lever 20 by the second and third balls 14a is substantially lost.

The operation of the pretensioner 9 is substantially the same as the operation of the conventional pretensioner so far. In the conventional pretensioner, balls of which pressing forces onto levers are lost exit from a cutout of the pipe, are spaced apart from the levers, and are stored into a ball storing chamber formed in the pretensioner. On the other hand, in the pretensioner 9 of this embodiment, no ball storing chamber is formed so that the first through third balls 14a of which pressing forces onto the levers 17, 20 are lost are guided by an arc guide face 11a of the plug 11 to escape from a cutout 10c of the pipe 10, and are moved to an arc guide passage 22 formed between a casing 9a and a power transmission retainer 21b of a power transmission unit 21 as will be described later.

With the pressing force onto the lever 20 which is sequentially adjacent to the former lever in the clockwise direction by the fourth or later ball 14a, the ring gear 18 and the pinion 19 continue to rotate in the counterclockwise direction. As shown in Fig. 4(c), the balls 14a which move into the arc guide passage 22 and of which pressing forces onto levers are substantially lost are moved along the guide passage 22 according to the rotation of the ring gear 18 by the levers 17, 20 of the ring gear 18. As the first ball 14a comes in contact with a ball stopper 10d of the pipe 10, the first ball 14a is stopped, whereby the rotation of the ring gear 18 is stopped. Therefore, the rotation of the pinion 19 is also stopped, whereby the spool terminates the operation of winding up the seat belt 4. Because of the operation of winding up the seat belt 4 by the pretensioner 9, the force of restraining the occupant with the seat belt 4 is increased.

Since the rotation of the ring gear 18 is stopped, the second and later balls 14a are also stopped. At this point, the gas pressure of produced gas in the pipe 10 is low. As mentioned above, when all of the balls 14a are stopped, most of the balls 14a are in the arc guide passage 22 between the casing 9a and the power transmission retainer 21b. That is, most of the balls 14a are accommodated in the guide passage 22 (that is, inside the casing 9a of the pretensioner 9) at the termination of the operation of the pretensioner 9.

By the way, in the pretensioner 9 of this embodiment, the pipe 10 is arranged as follows. That is, in a state that the pretensioner 9 is mounted in a vehicle as shown in Fig. 4(a) through Fig. 4(c), the distal end 10a of the pipe 10 is set at the lowermost position so that the pipe 10 extends linearly upwardly from the distal end 10a.

Further, as shown in Fig. 2(c), the pipe 10 is bent substantially at a right angle to a side opposite to a stay 8a at a position near the top of the base 8b of the frame 8 and extends linearly in a direction perpendicular to or substantially perpendicular to the central axis α of the spool and horizontally. Further, as shown in Fig. 2(a), the pipe 10 is bent substantially at a right angle to a side opposite to the base 8b in a direction parallel to the central axis α of the spool at a position near the end opposite to the stay 8a of the base 8b and extends linearly in a direction parallel to or substantially parallel to the central axis α of the spool and horizontally. Furthermore, as shown in Fig. 2(c), the pipe is bent substantially at a right angle to a side of the stay 8a at a position near the end opposite to the base 8b in a direction parallel to the central axis α of the spool and extends linearly in a direction slightly inclined upwardly relative to the direction perpendicular to or substantially perpendicular to the central axis α of the spool. Therefore, as shown in Fig. 2(b) and Fig. 3(a), the pressure vessel 15 and the gas generator 16 are disposed to face slightly upwardly above the base 8b. In this arrangement of the pipe 10, the pressure vessel 15 and the gas generator 16 are disposed above the spool to face to the inner side of the vehicle cabin (the upper side in Fig. 2(c) or the left side in Fig. 3(a)).

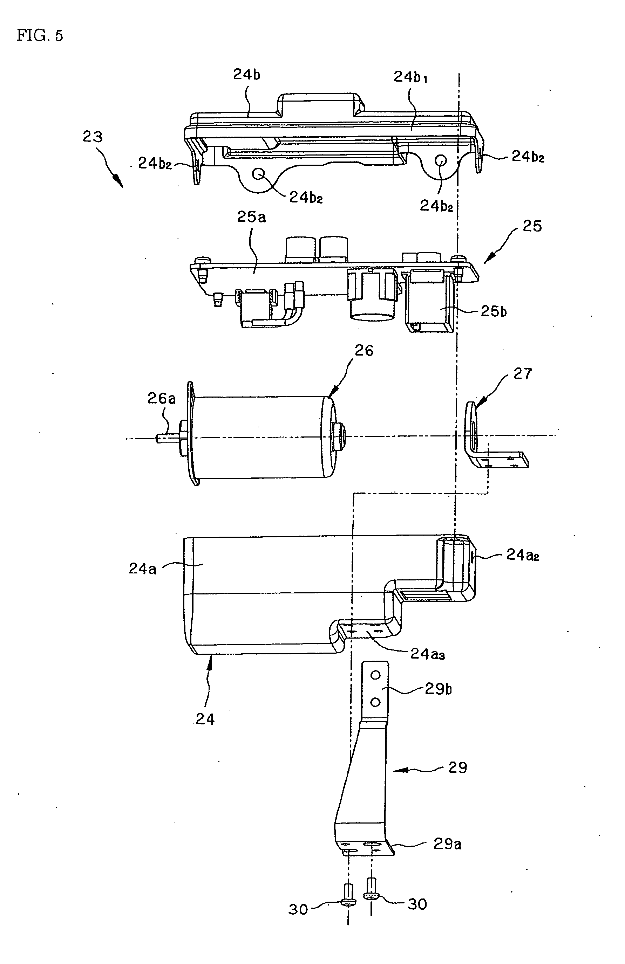

As shown in Figs. 2(a), 2(b) and Figs. 3(a), 3(b), a motor/ECU all-in-one unit 23 is disposed directly below the pretensioner 9. As shown in Fig. 5, the motor/ECU all-in-one unit 23 comprises a unit casing 24, an ECU 25, a motor 26, and a motor stopper 27.

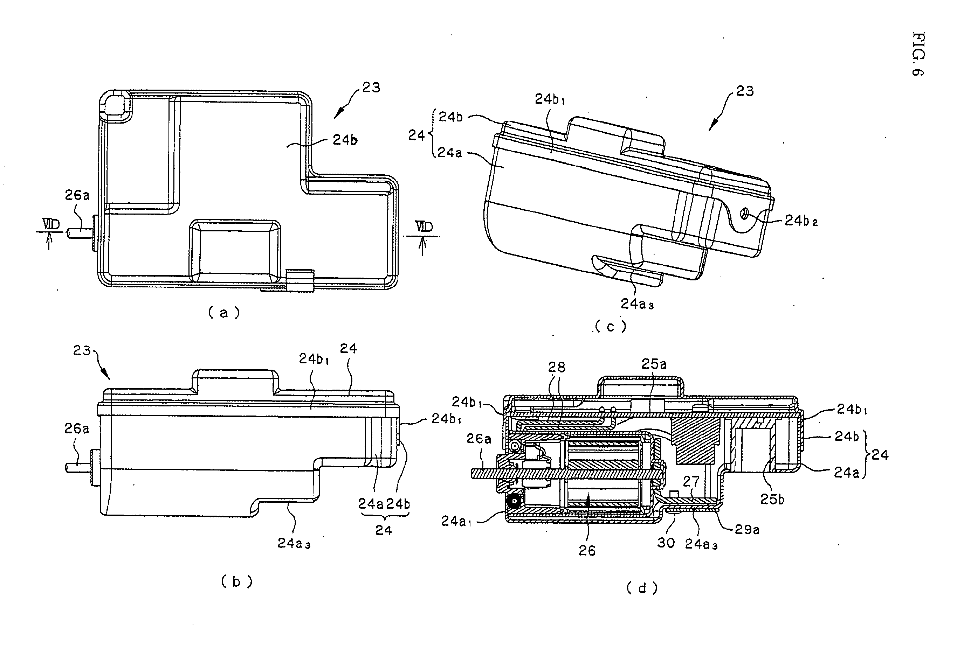

As shown in Fig. 5 and Figs. 6(a) through 6(c), the unit casing 24 comprises a casing body 24a and a cover 24b. The casing body 24a and the cover 24b are both made of a conventionally-known thermal-conductive material such as a metal having high thermal conductivity. As shown in Fig. 6(d), the casing body 24a is formed in a container-like shape of which upper side opens. The motor 26 is attached to an inner surface of the casing body 24a with adhesive agent. As the adhesive agent of this case, a conventionally-known thermal-conductive adhesive agent having high thermal conductivity may be used. The motor 26 is held between a side wall 24a₁ of the casing body 24a and the motor stopper 27 so that the motor 26 is aligned in the axial direction.

The cover 24b has a ring-like flange 24b₁ which projects downwardly around the entire circumference of the cover 24b. The flange 24b₁ is provided with a predetermined number (four, in the illustrated example) of mounting holes 24b₂. The cover 24b is put on the casing body 24a to close the opening of the casing body 24a. In this state, the upper end portion of the casing body 24a is covered by the flange 24b₁ of the cover 24b around the entire circumference of the casing body 24a.

The ECU 25 is disposed above the motor 26. The ECU 25 comprises an ECU substrate 25a and an ECU connector 25b which is electrically connected to the ECU substrate 25a and can be connected to an external device. The ECU 25 is mounted in the unit casing 24 such that the outer periphery of the ECU substrate 25a is sandwiched between the upper edge of the casing body 24a and the cover 24b and the connection port of the ECU connector 25b faces downwardly. In this case, the bottom of the casing body 24a is provided at a position corresponding to the ECU connector 25b with an opening which opens downwardly and allows the ECU connector 25b to be electrically connected to the external device. The motor 26 and the ECU substrate 25a are electrically connected via wires 28. The cover 24b is attached to the casing body 24a by inserting screws or bolts into mounting holes 24b₂ of the cover 24b and screwing the screws or bolts into threaded holes 24a₂ which are formed in the side walls of the casing body 24a and correspond to the mounting holes 24b₂.

In this manner, the motor/ECU all-in-one unit 23 in which the ECU 25 and the motor 26 are accommodated together is constructed. In this case, since the cover 24b has no penetrating opening except the mounting holes 24b₂ formed in the flange 24b₁ and the outer periphery of the upper end portion of the casing body 24a is covered by the annular flange 24b₁ around the entire circumference, the motor/ECU all-in-one unit 23 has a structure without opening at the upper side. In addition, motor shaft 26a of the motor 26 projects outwardly from one end side of the motor/ECU all-in-one unit 23.

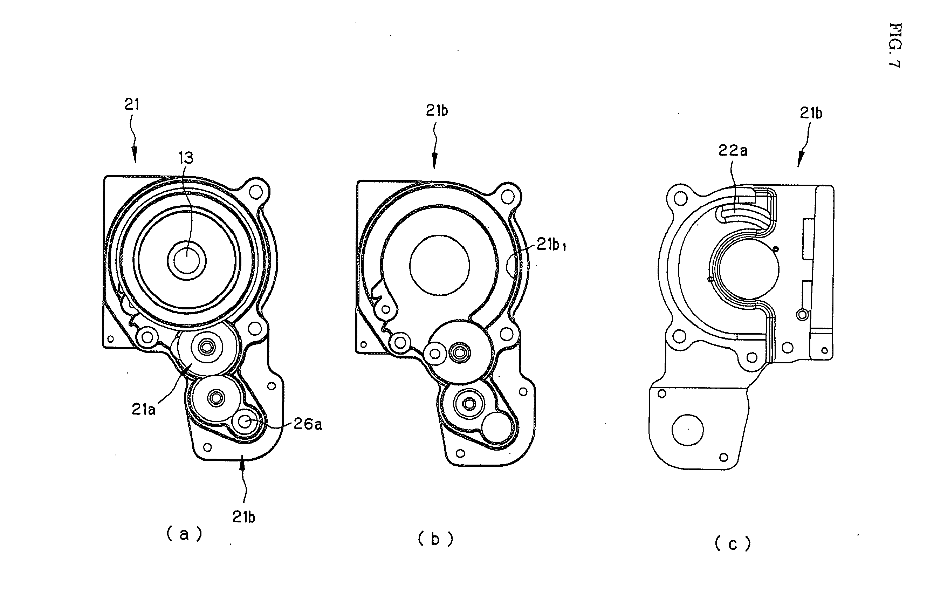

As shown in Figs. 2(a) and 2(b), the power transmission unit 21 is disposed on a side of the pretensioner 9 opposite to the frame 8. As shown in Fig. 7(a), the power transmission unit 21 comprises a power transmission gear mechanism 21a, connecting the motor shaft 26a and the rotary shaft 13 which is rotatable together with the spool, and the power transmission retainer 21b. As shown in Fig. 7(b), the power transmission retainer 21b has a gear train receiving concavity 21b₁ formed in one surface thereof, in which the power transmission gear mechanism 21a is accommodated. The power transmission gear mechanism 21a transmits rotation of the motor 26 from the motor shaft 26a to the rotary shaft 13 with reducing the speed. Therefore, the spool can be rotated by the rotation of the motor 26 both in the seat belt winding direction and the seat belt unwinding direction. In this case, the rotation of the motor 26 is controlled by the ECU 25. As shown in Fig. 7(c), a passage groove 22a as the arc guide passage 22 for the balls 14a of the aforementioned pretensioner 9 is formed in the other side (the side facing the pretensioner 9) of the power transmission retainer 21b. The power transmission retainer 21b is attached to one side wall 8c of the base 8b of the frame 8 together with the casing 9a of the pretensioner 9. In the seat belt retractor 3 of this embodiment, the power transmission retainer 21b functions also as a cover for the casing 9a of the pretensioner 9.

As shown in Fig. 2(a), a side of the motor/ECU all-in-one unit 23 where the motor shaft 26a projects is fixed to the power transmission retainer 21b and a nearly center portion of the motor/ECU all-in-one unit 23 is supported on the base 8b of the frame 8 via a unit stay 29. As shown in Fig. 5, the unit stay 29 is formed in a substantially L-like simple shape and has a plate-like unit supporting portion 29a and a frame mounting portion 29b. A flat supported portion 24a₃ of the casing body 24a is supported flatly (plane contact) by the unit supporting portion 29a. As shown in Fig. 6(d), the motor stopper 27 and the unit supporting portion 29a are fixed together by fastener means 30 such as bolts inserted into respective supporting holes formed in the motor stopper 27, the unit supporting portion 29a, and the casing body 24a, whereby the motor/ECU all-in-one unit 23 is supported on the unit supporting portion 29a. The frame mounting portion 29b is mounted to the base 8b by fastener means such as bolts. In this manner, the motor/ECU all-in-one unit 23 is flatly supported on the unit stay 29 at a position directly below the center of gravity.

According to the seat belt retractor 3 of this embodiment having the aforementioned structure, the pretensioner 9 is disposed such that the distal end 10a of the pipe 10 is located slightly below the spool and a proximal end 10b of the pipe 10 on the side of the gas generator 16 is located at the top of the frame 8, thereby preventing the pretensioner 9 from greatly projecting downwardly like the conventional seat belt retractor disclosed in the aforementioned JP-A-2004-189024. This allows a large space to be formed below the spool of the seat belt retractor 3 so that this space can be used as an installation space for the ECU 25 and the motor 26. Therefore, it is possible to effectively prevent the enlargement of the seat belt retractor 3 and install the ECU 25 and the motor 26 below the spool.

Since the ECU 25 and the motor 26 are allowed to be installed below the spool, the motor/ECU all-in-one unit 23 in which the ECU 25 and the motor 26 are united can be achieved. Therefore, the installation of the seat belt retractor 3 to the vehicle body is facilitated and the man-hour requirement for installation is reduced because the assembly work is achieved just by mounting the motor/ECU all-in-one unit 23 to the frame 8.

Further, the motor stopper 27 for aligning the motor 26 in the axial direction and the unit supporting portion 29a of the unit stay 29 are fixed together via the casing body 24a, thereby reducing the number of parts and simplifying the structure of the motor/ECU all-in-one unit. In addition, the motor/ECU all-in-one unit is flatly supported by the unit supporting portion 29a, thereby stably supporting the motor/ECU all-in-one unit 23. Therefore, the external force tolerance and the vibration resistance for supporting the motor/ECU all-in-one unit 23 can be improved. Especially, the motor/ECU all-in-one unit 23 is supported at a position directly below the center of gravity thereof, thereby further stably supporting the motor/ECU all-in-one unit 23.
Further, the power transmission retainer 21b functions also as the cover for the casing 9a of the pretensioner 9, thereby allowing elimination of an exclusive cover for the casing 9a. Therefore, it is possible to further reduce the number of parts and reduce the man-hour requirement for assembling the seat belt retractor 3.

Since the unit casing 24 of the motor/ECU all-in-one unit 23 is made of a thermal-conductive material having good thermal conductivity, heat expelled from the motor 26 can be efficiently released outside through the unit casing 24 having good thermal conductivity even though the ECU 25 and the motor 26 are accommodated together in the unit casing 24. Therefore, the inner temperature of the unit casing 24 can be prevented from increasing, thereby preventing the ECU 25 and the motor 26 from being affected by the heat.

Because of the motor/ECU all-in-one unit 23, the ECU 25 and the motor 26 can be previously connected by the wires 28 and the wires 28 can be arranged within the unit casing 24. Therefore, the wiring work during the installation of the seat belt retractor 3 to the vehicle body can be eliminated, thereby facilitating the installation of the seat belt retractor 3 to the vehicle body and reducing leakage of noises produced by the wires 28 without shield member for exclusive use. Therefore, the noise resistance of the seat belt retractor 3 is improved and cost down is achieved.

Further, the connection port of the ECU connector 25b of the ECU 25 is arranged to face downwardly, the cover 24b of the unit casing 24 is provided with no opening which opens upward, and the upper end portion of the casing body 24a is covered by the flange 24b₁ of the cover 24b around the entire circumference of the casing body 24a, thereby making the motor/ECU all-in-one unit 23 have a structure without opening at the upper side. Therefore, it prevents infiltration of water into the unit casing 24, thereby effectively improving the respective drip-proofnesses of the ECU 25 and the motor 26.

According to the seat belt apparatus 1 with the seat belt retractor 3 of this embodiment, the motor 26 and the ECU 25 is united so as to facilitate the installation to the vehicle body and the motor/ECU all-in-one unit 23 can be stably supported by the unit stay 29, thereby increasing the design freedom of the seat belt retractor 3 for the installation to the vehicle body. Therefore, the seat belt retractor 3 can be flexibly installed to the vehicle body, thereby improving the convenience of the seat belt apparatus 1.
It should be understood that the present invention is not limited to the aforementioned embodiment and various design changes could be made within the range of features disclosed in patent claims.

The seat belt retractor and the seat belt apparatus of the present invention can be preferably applied to a seat belt retractor which winds and unwinds a seat belt by means of a motor, a seat belt apparatus with such a seat belt retractor, and particularly preferably applied to a seat belt retractor further having a pretensioner and a seat belt apparatus with such a seat belt retractor.

## Claims

1. A seat belt retractor comprising: at least a spool for winding up a seat belt (4), a frame (8) for rotatably supporting said spool; a motor (26) for rotating said spool in a seat belt winding direction and a seat belt unwinding direction; and a power transmission unit (21) for transmitting rotation of said motor (26) to said spool, wherein
said seat belt retractor (3) further comprises an electric control unit (ECU) (25) for controlling said motor (26),
said motor (26) and said electric control unit (25) are united to compose a motor/ECU all-in-one unit (23), and
said motor/ECU all-in-one unit (23) is supported on said frame (8) directly below said spool.

2. A seat belt retractor as claimed in claim 1, further comprising a pretensioner (9) which rotates said spool in the seat belt winding direction with gas generated by a gas generator (16) in the event of an emergency, wherein
said gas generator (16) for said pretensioner (9) is disposed above said spool and is supported by said frame (8).

3. A seat belt retractor as claimed in claim 2, wherein said power transmission unit (21) comprises a power transmission mechanism (21a) for transmitting the rotation of said motor (26) to said spool with reducing the speed and a power transmission retainer (21b) for accommodating said power transmission mechanism (21a), and
said power transmission retainer (21b) functions also as a casing for said pretensioner (9).

4. A seat belt retractor as claimed in any one of claims 1 through 3, wherein said motor/ECU all-in-one unit (23) has a unit casing (24),
said motor (26) and said electric control unit (25) are accommodated in said unit casing (24),
said unit casing (24) comprises a casing body (24a) having an upper opening, and a cover (24b) for closing the upper opening of said casing body (24a), and
said casing body (24a) and said cover (24b) are each made of a thermal-conductive material having high thermal conductivity.

5. A seat belt apparatus comprises at least a seat belt retractor (3) for winding up a seat belt (4), a tongue (6) slidably supported by the seat belt (4), and a buckle (7) which is fixed to a vehicle body and to which said tongue (6) can be detachably latched, wherein
said seat belt retractor (3) is a seat belt retractor (3) as claimed in any one of claims 1 through 4.
